# EUROPÄISCHE PATENTSCHRIFT

(11) **EP 2 910 104 B1**
(45) Veröffentlichungstag und Bekanntmachung des Hinweises auf die Patenterteilung: **24.08.2016**
(21) Anmeldenummer: 15154944.1
(22) Anmeldetag: 13.02.2015
(51) Int. Cl.: A01D 90/04, A01F 15/10

(54) **Schneidwerk für eine Erntemaschine**
Cutting assembly for an agricultural harvester
Dispositif de coupe pour une moissonneuse

(30) Priorität: 25.02.2014 DE 102014102392
(43) Veröffentlichungstag der Anmeldung: 26.08.2015
(73) Patentinhaber: CLAAS Saulgau GmbH, 88348 Bad Saulgau (DE)
(72) Erfinder: Loebe, Stefan, 88348 Bad Saulgau (DE); Birkhofer, Stefan, 78333 Stockach (DE)

(56) Entgegenhaltungen:
- DE-A1- 3 334 045
- DE-A1- 3 603 667
- DE-A1- 19 707 662
- DE-A1-102011 013 640
- DE-A1-102013 007 304
- DE-C2- 2 954 175
- DE-C2- 19 832 463

## Beschreibung

Die Erfindung betrifft ein gemäß dem Oberbegriff des Anspruchs 1 ausgebildetes Schneidwerk für eine Erntemaschine wie insbesondere einen Ladewagen oder eine Ballenpresse.

Ein Schneidwerk der eingangsgenannten Art ist z.B. aus DE 198 32 463 C2, DE 197 07 662 A1, DE 29 54 175 C2, DE 33 34 045 A1 oder DE 10 2013 007 304 A1 bekannt. Bei diesem Schneidwerk sind eine Mehrzahl von Schneidmessern in Längsrichtung einer drehbar gelagerten Fördertrommel mit jeweiligem Abstand voneinander nebeneinanderliegend angeordnet und jeweils so um eine parallel zur Drehachse der Fördertrommel verlaufende Schwenkachse verschwenkbar gelagert, dass jedes Schneidmesser aus einer Schneidposition, in der es in einen an der Fördertrommel gebildeten Förderkanal für Erntegut hineingestellt ist, um unter Zusammenwirkung mit der Fördertrommel das Erntegut zu zerschneiden, im Kollisionsfall mit einem Fremdkörper im Förderkanal gegen die Vorspannung von Vorspannmitteln in Richtung weg von der Fördertrommel schwenkend ausweichen kann.

Bei diesem Schneidwerk weisen die Vorspannmittel für jedes der Schneidmesser ein Stütz- und Schaltglied auf, welches in einer Schaltstellung eine nachgiebige Abstützung des jeweiligen Schneidmessers in der Schneidposition erlaubt. Die Stütz- und Schaltglieder sind auf einer gemeinsamen Schaltwelle drehbar gelagert und jeweils mittels einer Verdrehfeder in eine Stützposition zum in der Schneidposition Abstützen des jeweiligen Schneidmessers vorgespannt. Dabei liegt das jeweilige Stütz- und Schaltglied an einer Rückseite des zugeordneten Schneidmessers an und stützt dieses somit in der Schneidposition nachgiebig ab. Durch die Anordnungsbeziehung von Stütz- und Schaltglied und zugeordnetem Schneidmesser ist in der Schneidposition des jeweiligen Schneidmessers nur ein kleiner Hebelarm wirksam, was eine große Vorspannkraft bewirkt. Beim nachgebenden aus der Schneidposition heraus Verschwenken des jeweiligen Schneidmessers vergrößert sich dieser Hebelarm jedoch zunehmend, was eine Reduzierung der Vorspannkraft bewirkt.

Allerdings sind bei diesem Schneidwerk sowohl die Anfangsgröße der Vorspannkraft (in der Schneidposition) als auch deren Reduzierungscharakteristik fest vorgegeben, so dass eine Verstellung der Nachgiebigkeit der Schneidmesser nicht ohne größeren Aufwand und schon gar nicht im laufenden Betrieb möglich ist. Dies kann bei schwankender Anzahl von Fremdkörpern wie Steinen, schwankendem Erntegutdurchsatz, unterschiedlichem Erntegut und sich veränderndem Messerzustand eine optimale Schneidwerkseinstellung erschweren oder gar unmöglich machen und damit die Betriebseigenschaften des Schneidwerks beeinträchtigen.

DE 10 2011 013 640 A1 offenbart ein Schneidwerk für eine Erntemaschine mit zumindest einem Messer, das an einem Messerträger gelagert und in einer Schneidstellung in einen Erntegutkanal hineinragend gehalten ist, wobei der Messerträger zwischen einer Arbeitsstellung und einer Nicht-Arbeitsstellung, in der das zumindest eine Messer außerhalb des Erntegutkanals angeordnet ist, beweglich gelagert ist, wobei das zumindest eine Messer an dem Messerträger beweglich gelagert ist derart, dass das Messer bei in Arbeitsstellung befindlichem Messerträger aus seiner Schneidstellung in eine Ausweich- und/oder Nichtschneidstellung verbringbar ist, wobei dem Messer eine vorspannbare Rückstellvorrichtung zur Rückstellung des Messers aus der Ausweich- und/oder Nichtschneidstellung in dessen Schneidstellung zugeordnet ist, wobei dem Messer Rückhaltemittel zum Zurückhalten des Messers in dessen Ausweich- und/oder Nichtschneidstellung relativ zum Messerträger zugeordnet sind und der Rückstellvorrichtung Deaktivierungsmittel zur Abschaltung oder Reduzierung der Rückstellkraft zugeordnet sind.

Aus DE 36 03 667 A1 ist eine Schneidvorrichtung im Förderkanal von landwirtschaftlichen Arbeitsmaschinen bekannt mit einer Vielzahl in Arbeitsstellung in den Förderkanal hineinragenden, an einem außerhalb des Förderkanals gelegenem Drehgelenk einzeln gelagerten Messern, die durch einen am Messerrücken mit seinem freien Ende angelenkten Schwenkarm eines federbelasteten Kniehebelsystems mit einem gestellseitig gelagerten Stützarm so geführt sind, dass sie bei Überlastung entgegen der Federkraft ausweichen können, wobei die einerseits gestellfest befestigte Feder an dem Stützarm angreift und einer der Arme an der vom Messer abgewandten Seite eine über das Kniegelenk hinausragende Fortsetzung aufweist und an dieser ein verstell- und feststellbarer Anschlag für den anderen Arm vorgesehen ist, durch den der Öffnungswinkel des Kniehebelsystems einstellbar ist.

Der Erfindung liegt daher die Aufgabe zugrunde, ein gemäß dem Oberbegriff des Anspruchs 1 ausgebildetes Schneidwerk für eine Erntemaschine, wie insbesondere einen Ladewagen oder eine Ballenpresse, bereitzustellen, so dass das Schneidwerk verbesserte Betriebseigenschaften aufweist.

Dies wird mit einem Schneidwerk gemäß Anspruch 1 erreicht. Weiterbildungen der Erfindung sind in den abhängigen Ansprüchen definiert.

Gemäß der Erfindung weist ein Schneidwerk für eine Erntemaschine, wie insbesondere einen Ladewagen oder eine Ballenpresse, auf: eine Fördertrommel, die um eine in einer Längsrichtung dieser verlaufende Drehachse drehbar gelagert ist; eine Mehrzahl von Schneidmessern, die um eine Schwenkachse aus einer Schneidposition, in der die Schneidmesser in einen an der Fördertrommel gebildeten Förderkanal für Erntegut hineingestellt sind, jeweils in eine Schwenkrichtung weg von der Fördertrommel geschwenkt werden können; und Vorspannmittel, welche eingerichtet sind, für die Schneidmesser jeweils eine Vorspannkraft bereitzustellen, welche das jeweilige Schneidmesser in eine Schwenkrichtung zur Schneidposition hin wirkend vorspannt, und eingerichtet sind, eine Größe der Vorspannkraft insbesondere unter Beibehaltung einer Position der Schwenkachse der Schneidmesser zu verändern.

Das erfindungsgemäße Schneidwerk zeichnet sich dadurch aus, dass die Vorspannmittel Krafteinstellmittel aufweisen, die so eingerichtet sind, dass die Größe der Vorspannkraft variabel, d.h. in einem vorbestimmten Einstellbereich und insbesondere unabhängig von einer Auslenkung der Schneidmesser und irgend einer sonstigen Bedingung frei wählbar, einstellbar ist. Bevorzugt ist die Größe der Vorspannkraft beim variablen Einstellen für alle Schneidmesser der Mehrzahl von Schneidmessern gleichzeitig und einheitlich einstellbar.

Dadurch, dass gemäß der Erfindung die Größe der Vorspannkraft variabel einstellbar ist, kann eine Ausrückschwelle für jedes Schneidmesser an die jeweils vorliegenden Einsatzbedingungen wie z.B. Fremdkörperanzahl, Erntegutdurchsatz, Erntegutart und Messerzustand angepasst werden und kann somit das Schneidwerk optimal eingestellt werden, wodurch die Betriebseigenschaften des Schneidwerks verbessert sind. Dadurch, dass die Größe der Vorspannkraft bevorzugt für alle Schneidmesser der Mehrzahl von Schneidmessern gleichzeitig und einheitlich einstellbar ist, wird die optimale Einstellung des Schneidwerks erleichtert.

Weil das Verändern bzw. Einstellen der Vorspannkraft insbesondere unter Beibehaltung einer Position der Schwenkachse der Schneidmesser realisiert wird, d.h. eine Messerträgeranordnung in ihrer Position im Schneidwerk nicht z.B. über Hydraulikzylinder linear verfahren werden muss, ist das Schneidwerk im Aufbau vereinfacht und sind die Herstellungs- und Wartungskosten reduziert.

Bevorzugt weist die Fördertrommel um einen Außenumfang und in Längsrichtung dieser verteilt eine Mehrzahl von nach radial außen vorstehenden Förderelementen auf und sind die Schneidmesser in Längsrichtung der Fördertrommel mit jeweiligem Abstand voneinander nebeneinanderliegend angeordnet, wobei die Schneidmesser jeweils so um die bevorzugt parallel zur Drehachse der Fördertrommel verlaufende Schwenkachse verschwenkbar gelagert sind, dass jedes Schneidmesser aus der Schneidposition, in der es in den an der Fördertrommel gebildeten Förderkanal für Erntegut hineingestellt ist, um unter Zusammenwirkung mit den Förderelementen das Erntegut zu zerschneiden, im Kollisionsfall mit einem Fremdkörper im Förderkanal gegen die Vorspannkraft in Richtung weg von der Fördertrommel schwenkend ausweichen kann.

Gemäß einer Ausführungsform der Erfindung weisen die Vorspannmittel für die Schneidmesser jeweils einen Hebelmechanismus auf, welcher mit dem jeweiligen Schneidmesser verbunden ist und welcher auf Anschlag in eine Stützstellung stellbar ist, in der sich das jeweilige Schneidmesser in der Schneidposition befindet, wobei die Vorspannmittel Federmittel aufweisen, welche die Hebelmechanismen mittels Federwirkung zum Anschlag hin in die Stützstellung vorspannen, und wobei die Krafteinstellmittel so vorgesehen sind, dass eine Stärke der Federwirkung variabel und insbesondere für alle Hebelmechanismen der Schneidmesser gleichzeitig und einheitlich einstellbar ist.

Mit anderen Worten wird gemäß dieser Ausführungsform der Erfindung die Vorspannkraft durch das Zusammenwirken der Federwirkung der Federmittel mit einer Hebelwirkung des Hebelmechanismus erzeugt. Da hier zwei Komponenten die wirkende Vorspannkraft realisieren, kann die Vorspannkraft noch besser variiert und somit noch besser an die Einsatzbedingungen angepasst werden. Außerdem können die Vorspannmittel durch geeignetes Abstimmen von Hebelmechanismus (Hebelarmlängen) und Federmitteln (Stärke der Federwirkung) noch besser an den zur Verfügung stehenden Bauraum angepasst werden.

Gemäß einer weiteren Ausführungsform der Erfindung weisen die Federmittel für jeden Hebelmechanismus eine separate Feder auf, deren eines Ende an einem Anlenkpunkt mit dem jeweiligen Hebelmechanismus verbunden ist, wobei die Krafteinstellmittel ein Verbindungselement, das jeweilige andere Enden der Federn der Hebelmechanismen miteinander verbindet, und Abstandsverstellmittel aufweisen, welche so eingerichtet sind, dass ein Abstand des Verbindungselements von den jeweiligen Anlenkpunkten variabel und für alle Federn gleichzeitig und einheitlich einstellbar ist.

Bei dieser Ausgestaltung der Erfindung wird durch einfaches Verstellen des Abstands des Verbindungselements von den Anlenkpunkten die wirkende Federkraft jeder Feder und damit die resultierende Federwirkung der Federmittel verändert und somit die Vorspannkraft für alle Schneidmesser gleichzeitig und einheitlich eingestellt bzw. verändert. Diese Lösung ist einfach, robust und wartungsarm.

Gemäß der Erfindung können die bevorzugt identisch ausgebildeten Federn mechanische Federn aus Metall oder aus einem gummielastischen Material oder auch pneumatische Federn sein. Gemäß der Erfindung können die Federn als Druckfedern oder wie bevorzugt als Zugfedern ausgebildet sein.

Gemäß noch einer Ausführungsform der Erfindung weisen die Abstandsverstellmittel zwei in Längsrichtung der Fördertrommel beabstandete Schwenkhebel, welche jeweils über eine sich in Längsrichtung der Fördertrommel erstreckende Schwenkachse schwenkbar gelagert sind und welche mit dem Verbindungselement verbunden sind, so dass das Verbindungselement über die Schwenkhebel eine Schwenkbewegung um deren Schwenkachse zu den Anlenkpunkten hin und von diesen weg ausführen kann, und eine Antriebseinrichtung zum Antreiben der Schwenkbewegung des Verbindungselements auf.

Durch das Vorsehen von an einer Schwenkachse gelagerten Schwenkhebeln brauchen für die Abstandsverstellmittel keine aufwendigen und ggf. wartungsintensiven Führungen (wie Linearführungen) bereitgestellt werden und können somit die Abstandsverstellmittel sehr robust und einfach ausgeführt sein.

Gemäß noch einer weiteren Ausführungsform der Erfindung weist das Verbindungselement zwei in Längsrichtung der Fördertrommel entgegengesetzte Längsenden auf, wobei die Antriebseinrichtung zwei Kolben-Zylinder-Einheiten aufweist, die mit jeweils einem der Längsenden des Verbindungselements verbunden und so eingerichtet sind, dass eine lineare Verstellbewegung jeder Kolben-Zylinder-Einheit an das Verbindungselement übertragbar ist, und wobei die beiden Kolben-Zylinder-Einheiten miteinander bewegungssynchronisiert sind.

Bevorzugt sind die Kolben-Zylinder-Einheiten dabei jeweils mit einem Ende (Kolbenstange oder Zylinder) mit einem der Längsenden des Verbindungselements verbunden und mit dem anderen Ende (Zylinder bzw. Kolbenstange) mit einem feststehenden Element wie einem Gehäuse des Schneidwerks beweglich verbunden bzw. daran abgestützt.

Z.B. hydraulische Kolben-Zylinder-Einheiten lassen sich in einfacher Weise in die Hydraulik einer Erntemaschine integrieren und reduzieren so den Ansteuerungsaufwand für die Schneidwerksverstellung. Natürlich könnte die Antriebseinrichtung anstelle der Kolben-Zylinder-Einheiten auch andere Motoren wie Linearmotoren (mit z.B. Spindelantrieb) oder Rotationsmotoren (z.B. Servomotoren) zum Antreiben der Schwenkbewegung des Verbindungselements aufweisen.

Gemäß einer Ausführungsform der Erfindung sind die Hebelmechanismen der Vorspannmittel jeweils als Kniehebelmechanismus ausgebildet, welcher zwei Kniehebel aufweist, die über ein Knickgelenk an jeweiligen Längsenden dieser um eine sich in Längsrichtung der Fördertrommel erstreckende erste Kniehebelachse schwenkbar miteinander verbunden sind, wobei das Knickgelenk in einer Gestrecktstellung der Kniehebel, in der die Kniehebel am Knickgelenk einen Winkel von nur wenig unter 180 Grad miteinander einschließen bzw. fast in gerader Linie verlaufen, auf Anschlag stellbar ist, so dass die Stützstellung für das jeweilige Schneidmesser hergestellt ist.

Durch diese Ausgestaltung der Erfindung mit Kniehebelmechanismen für die Schneidmesser lässt sich zusätzlich zur variablen Verstellung der Vorspannkraft eine gewünschte Verlaufscharakteristik für die Größe der Vorspannkraft in Abhängigkeit von der Auslenkung der Schneidmesser aus der Schneidposition realisieren. Bevorzugt sind die Federmittel dabei so vorgesehen, dass sie ihre Federwirkung an dem Knickgelenk in den Kniehebelmechanismus einleiten.

Gemäß noch einer Ausführungsform der Erfindung ist ein dem Knickgelenk abgewandtes Längsende des einen Kniehebels um eine zur ersten Kniehebelachse parallele zweite Kniehebelachse schwenkbar gelagert und ist ein dem Knickgelenk abgewandtes Längsende des anderen Kniehebels um eine zur ersten Kniehebelachse parallele dritte Kniehebelachse schwenkbar mit dem Schneidmesser verbunden, so dass ein in Schwenkrichtung weg von der Fördertrommel Verschwenken des Schneidmessers ein aus der Gestrecktstellung im Knickgelenk Einknicken der Kniehebel des Kniehebelmechanismus gegen die Vorspannung der Federmittel bewirkt.

Gemäß noch einer weiteren Ausführungsform der Erfindung weisen die Krafteinstellmittel eine Einstellungserfassungseinrichtung auf, welche eingerichtet ist, einen mit der Größe der Vorspannkraft in Beziehung stehenden Einstellparameter der Krafteinstellmittel zu erfassen.

Die Einstellungserfassungseinrichtung kann z.B. einen Winkelsensor zur Erfassung eines Schwenkwinkels von einem oder von beiden der Schwenkhebel der Abstandsverstellmittel und/oder einen Linearwegsensor wie einen Wegmesszylinder zur Erfassung eines linearen Verstellweges von einer oder von beiden der Kolben-Zylinder-Einheiten der Antriebseinrichtung der Abstandsverstellmittel aufweisen. Durch diese Sensoren lässt sich in einfacher Weise auf die Position des Verbindungselements in Bezug auf die Anlenkpunkte bzw. dessen Abstand davon und somit auf die Federwirkung der Federmittel und schließlich auf die Vorspannkraft der Vorspannmittel rückschließen.

Gemäß noch einer Ausführungsform der Erfindung weist das Schneidwerk eine Ausschwenk-Erfassungseinrichtung auf, welche eingerichtet ist zu erfassen, wenn eines der Schneidmesser aus seiner Schneidposition herausgeschwenkt wird.

Die Ausschwenk-Erfassungseinrichtung kann zu diesem Zwecke z.B. eine Lichtschranke, eine Kamera oder einen oder mehrere Näherungssensoren aufweisen, so dass erfasst werden kann, wenn eines der Schneidmesser aus seiner Schneidposition herausgeschwenkt wird. Daraus lässt sich vorteilhaft z.B. auf die Anzahl von Messerauslenkungen bzw. Messerauslösungen pro Zeiteinheit rückschließen, was ein Parameter für die Verstellung der Vorspannkraft sein kann. So kann z.B. bei Überschreitung einer bestimmten Anzahl von Messer+auslenkungen pro Zeiteinheit die Vorspannkraft erhöht werden und/oder bei Unterschreitung einer bestimmten Anzahl von Messerauslenkungen pro Zeiteinheit die Vorspannkraft vermindert werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig.1: zeigt eine seitliche Schnittansicht eines Schneidwerks einer Erntemaschine gemäß einer Ausführungsform der Erfindung.
- Fig.2: zeigt eine perspektivische vergrößerte Ansicht eines Bereichs X aus Fig. 1.

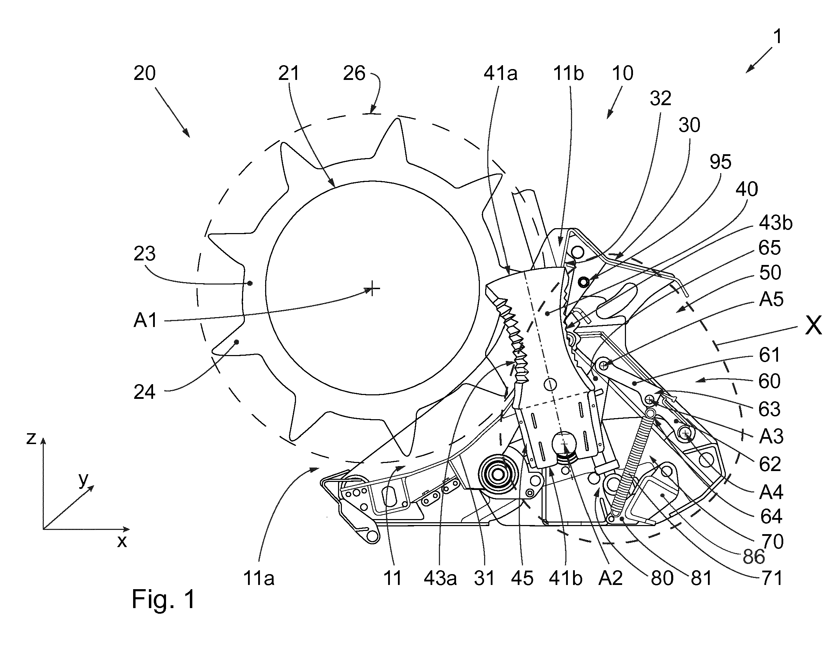

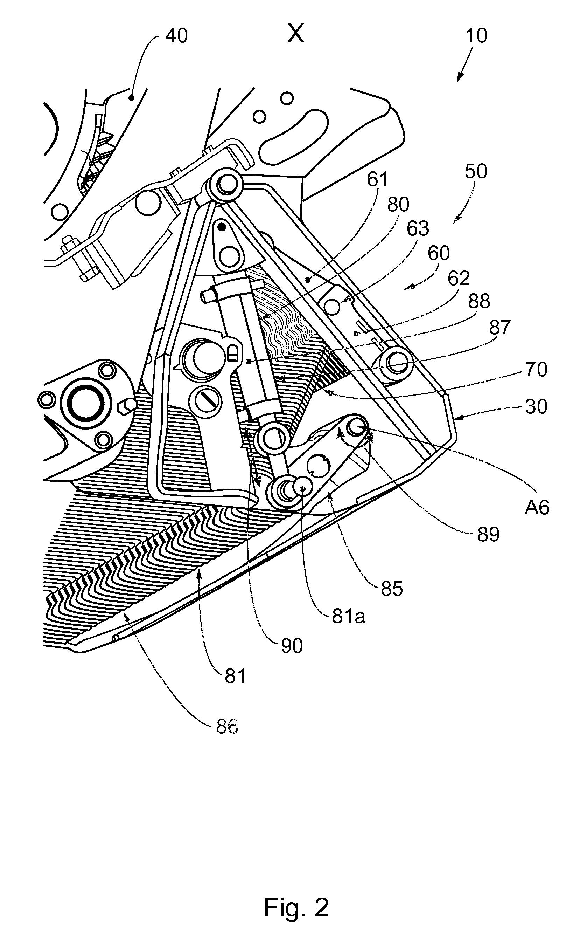

Die Figuren 1 und 2 zeigen ein Schneidwerk 10 einer Erntemaschine 1 (nicht vollständig dargestellt) gemäß einer Ausführungsform der Erfindung. Die Erntemaschine 1 ist bevorzugt als Ladewagen oder Ballenpresse ausgebildet, wobei dem Schneidwerk 10 eine Pickupeinrichtung (nicht dargestellt) mit z.B. einer Stachelwalze zur Aufnahme von nicht dargestelltem Erntegut (wie z.B. Gras oder anderes Halm- und/oder Blattgut) von einem landwirtschaftlichen Feld vorgelagert ist.

Das von der Pickupeinrichtung bzw. Aufnahmeeinrichtung aufgenommene Erntegut wird dann von dieser rotatorisch zu einem Eingang 11a eines Förderkanals 11 des Schneidwerks 10 gefördert und dort von einer Fördertrommel 20 des Schneidwerks 10 übernommen und entlang des Förderkanals 11 zum Zerschneiden weitergefördert. Nach dem Zerschneiden des Ernteguts wird dieses an einem Ausgang 11 b aus dem Förderkanal 11 ausgegeben und dort z.B. von einer Presseinrichtung oder einer weiteren Fördereinrichtung (beide Letzteren nicht dargestellt) übernommen.

Im Detail weist das Schneidwerk 10 die Fördertrommel 20, ein Gehäuse 30, eine Mehrzahl von Schneidmessern 40 und Vorspannmittel 50 für die Schneidmesser 40 auf. Die Fördertrommel 20 ist um eine in einer Längsrichtung dieser (y-Achsenrichtung in Fig. 1) verlaufende Drehachse A1 drehbar am Gehäuse 30 gelagert und weist um einen Außenumfang 21 der Fördertrommel 20 und in deren Längsrichtung verteilt eine Mehrzahl von nach radial außen vorstehenden Förderelementen in Form von Mitnehmerzinken 24 auf, welche zusammen einen Hüllzylinder 26 der Fördertrommel 20 definieren.

Obwohl aus den Figuren 1 und 2 nicht im Detail ersichtlich, sind genauer beschrieben jeweils zwei metallische sternförmige Mitnehmerscheiben 23, die jeweils eine gleiche Anzahl (z.B. neun) Mitnehmerzinken 24 gleichmäßig umfänglich verteilt aufweisen, umfänglich geringfügig zueinander versetzt zu einem Mitnehmerscheibenpaar zusammengefügt. Auf dem Außenumfang 21 der Fördertrommel 20 sind wiederum entlang einer gesamten Arbeitslänge (in y-Achsenrichtung) der Fördertrommel 20 eine Mehrzahl solcher Mitnehmerscheibenpaare mit gleichmäßigem Abstand in Längsrichtung der Fördertrommel 20 voneinander und umfänglich so zueinander versetzt angeordnet, dass ihre Mitnehmerzinken 24 eine Schraubenkontur bzw. Wendelkontur auf der Fördertrommel 20 bilden.

Ein Leitelement 31 des Gehäuses 30 ist als ein Bodenblech des Schneidwerks 10 ausgebildet und schirmt eine im Gehäuse 30 aufgenommene Schneidwerksmechanik (nicht separat bezeichnet) gegen den Förderkanal 11 ab. Das Leitelement 31 erstreckt sich dabei so in Längsrichtung der Fördertrommel 20 über eine gesamte Länge des Hüllzylinders 26 und bogenförmig um einen Sektor eines Außenumfangs des Hüllzylinders 26, dass zwischen dem Außenumfang 21 der Fördertrommel 20 und dem Leitelement 31 der Förderkanal 11 für das Erntegut gebildet ist.

Die Schneidmesser 40 sind in Längsrichtung (y-Achsenrichtung in Fig. 1) der Fördertrommel 20 mit jeweiligem Abstand voneinander nebeneinanderliegend in einer Reihe angeordnet, so dass sie die gesamte Arbeitslänge der Fördertrommel 20 abdecken bzw. nutzen.

Jedes Schneidmesser 40 weist ein erstes Längsende 41 a und ein zweites Längsende 41 b auf und erstreckt sich in einer in Fig. 1 gezeigten Schneidposition dessen mit seinem zweiten Längsende 41 b an einer am Gehäuse 30 gelagerten sich auf einer der Fördertrommel 20 abgewandten Seite des Leitelements 31 befindenden Schwenkachse A2 gelagert von der der Fördertrommel 20 abgewandten Seite des Leitelements 31 aus längsseits durch eine schlitzförmige Öffnung 32 in dem Leitelement 31 hindurch in den Förderkanal 11 hinein und greift dabei in den Abstand zwischen zwei benachbarten Mitnehmerscheibenpaaren ein, um unter Zusammenwirkung mit deren Mitnehmerzinken (Förderelementen) 24 das durch den Förderkanal 11 hindurchgeförderte Erntegut zu zerschneiden. Das erste Längsende 41 a ragt dabei in den Förderkanal 11 hinein.

Die Schneidmesser 40 weisen jeweils als Wendeschneidmesser ausgebildet an ihren entgegengesetzten Längsseiten jeweilige Schneiden 43a bzw. 43b auf, die spiegelsymmetrisch ausgebildet entlang ihrer Längenabmessung konkav gekrümmt sind. Die Schneidmesser 40 sind über jeweilige Messeraufnahmen 45 einzeln zwischen der Schneidposition, in die sie von den Vorspannmitteln 50 jeweils mittels einer in eine Schwenkrichtung zur Schneidposition hin wirkenden Vorspannkraft vorgespannt sind, einer Ausweichposition und einer Außerbetriebsposition verschwenkbar an der Schwenkachse A2 gelagert.

Genauer ist jedes Schneidmesser 40 an seinem zweiten Längsende 41 b über seine jeweilige Messeraufnahme 45 auf der sich in Längsrichtung (y-Achsenrichtung) bzw. parallel zur Drehachse A1 der Fördertrommel 20 erstreckenden Schwenkachse A2 schwenkbar gelagert, so dass das Schneidmesser 40 aus der in Fig. 1 gezeigten Schneidposition heraus, in der es in den Förderkanal 11 hineingestellt ist, bei Kollision mit einem Fremdkörper im Förderkanal 11 gegen die von den Vorspannmitteln 50 bereitgestellte Vorspannkraft durch die zugehörige Öffnung 32 im Leitelement 31 hindurch in Schwenkrichtung weg von der Fördertrommel 20 schwenkend in die Ausweichposition ausweichen kann oder bei Nichtverwendung weiter in die Außerbetriebsposition verschwenkt werden kann.

Die Vorspannmittel 50 sind gemäß der Erfindung so eingerichtet, dass eine Größe der Vorspannkraft unter Beibehaltung einer Position der Schwenkachse A2 der Schneidmesser 40 variabel und für alle Schneidmesser 40 gleichzeitig und einheitlich einstellbar ist. Genauer weisen die Vorspannmittel 50 für die Schneidmesser 40 jeweils einen Hebelmechanismus 60 sowie Federmittel 70 und Krafteinstellmittel 80 auf.

Der Hebelmechanismus 60 ist mit dem jeweiligen Schneidmesser 40 verbunden und auf Anschlag in eine in den Figuren 1 und 2 gezeigte Stützstellung stellbar, in der sich das jeweilige Schneidmesser 40 in der Schneidposition befindet. Die Federmittel 70 spannen die Hebelmechanismen 60 mittels Federwirkung zum Anschlag hin in die Stützstellung vor, so dass die jeweils gewünschte Vorspannkraft in Schwenkrichtung der Schneidmesser 40 zur Schneidposition hin für die jeweiligen Schneidmesser 40 bereitgestellt wird.

Die Hebelmechanismen 60 sind jeweils als Kniehebelmechanismus ausgebildet, welcher zwei Kniehebel 61, 62 aufweist, die über ein Knickgelenk 63 an jeweiligen Längsenden dieser um eine sich parallel zur Drehachse A1 der Fördertrommel 20 erstreckende erste Kniehebelachse A3 schwenkbar miteinander verbunden sind, wobei das Knickgelenk 63 in einer Gestrecktstellung der Kniehebel 61, 62, in der die Kniehebel 61, 62 am Knickgelenk 63 einen Winkel von nur wenig unter 180 Grad miteinander einschließen bzw. fast in gerader Linie verlaufen, auf Anschlag stellbar ist, so dass die in den Figuren 1 und 2 gezeigte Stützstellung für das jeweilige Schneidmesser 40 hergestellt ist.

Ein dem Knickgelenk 63 abgewandtes Längsende des einen Kniehebels 62 ist um eine zur ersten Kniehebelachse A3 parallele zweite Kniehebelachse A4 schwenkbar am Gehäuse 30 des Schneidwerks 10 festgelegt, wohingegen ein dem Knickgelenk 63 abgewandtes Längsende des anderen Kniehebels 61 um eine zur ersten Kniehebelachse A3 parallele dritte Kniehebelachse A5 schwenkbar mit einem drehfest an die Messeraufnahme 45 des jeweiligen Schneidmessers 40 angebundenen Hebel 65 verbunden ist.

Die Federmittel 70 weisen für jeden Hebelmechanismus 60 eine separate Zugfeder 71 aus Metall auf, deren eines Ende an einem Anlenkpunkt 64 mit dem jeweiligen Hebelmechanismus 60 verbunden ist, so dass die Zugfeder 71 ihre Federkraft bzw. Federwirkung an dem Knickgelenk 63 in den jeweiligen Hebelmechanismus 60 einleitend diesen zum Anschlag des Knickgelenks 63 hin in die Gestrecktstellung vorspannt. Ein in Schwenkrichtung von der Fördertrommel 20 weg Verschwenken eines jeweiligen Schneidmessers 40 (in die Ausweichposition oder die Außerbetriebsposition) bewirkt ein aus der Gestrecktstellung im Knickgelenk 63 Einknicken der Kniehebel 61, 62 des Hebelmechanismus 60 gegen die Federkraft der Zugfeder 71.

Die Krafteinstellmittel 80 sind gemäß der Erfindung so vorgesehen, dass eine Stärke der Federwirkung bzw. eine Größe der Federkraft variabel und für alle Hebelmechanismen 60 der Schneidmesser 40 gleichzeitig und einheitlich einstellbar ist. Die Krafteinstellmittel 80 weisen ein trägerähnliches Verbindungselement 81, das jeweilige andere Enden der Zugfedern 71 der Hebelmechanismen 60 miteinander verbindet, und Abstandsverstellmittel 85 auf, welche so eingerichtet sind, dass ein Abstand des Verbindungselements 81 von den jeweiligen Anlenkpunkten 64 variabel und für alle Zugfedern 71 gleichzeitig und einheitlich einstellbar ist.

Die Abstandsverstellmittel 85 weisen in Längsrichtung (in y-Achsenrichtung in Fig. 1) der Fördertrommel 20 beabstandete Schwenkhebel 86 auf, welche jeweils über eine sich in Längsrichtung der Fördertrommel bzw. parallel zu deren Drehachse A1 erstreckende Schwenkachse A6 schwenkbar am Gehäuse 30 gelagert sind und welche mit dem Verbindungselement 81 verbunden sind, so dass das Verbindungselement 81 über die Schwenkhebel 86 eine Schwenkbewegung um deren Schwenkachse A6 zu den Anlenkpunkten 64 hin und von diesen weg ausführen kann. Zum Antreiben der Schwenkbewegung des Verbindungselements 81 weisen die Abstandsverstellmittel 85 eine Antriebseinrichtung 87 auf.

Das Verbindungselement 81 weist zwei in Längsrichtung (in y-Achsenrichtung in Fig. 1) der Fördertrommel 20 entgegengesetzte Längsenden (in Fig. 2 ist nur das eine Längsende 81a ersichtlich) auf, wobei die Antriebseinrichtung 87 zwei miteinander bewegungssynchronisierte hydraulische Kolben-Zylinder-Einheiten 88 (in Fig. 2 ist nur die eine Kolben-Zylinder-Einheit 88 ersichtlich) aufweist, die mit jeweils einem der Längsenden 81 a des Verbindungselements 81 verbunden und so eingerichtet sind, dass eine lineare Verstellbewegung jeder Kolben-Zylinder-Einheit 88 an das Verbindungselement 81 übertragbar ist.

Genauer ist ein kolbenstangenseitiges Ende jeder Kolben-Zylinder-Einheit 88 mit einem der Längsenden 81 a des Verbindungselements 81 verschwenkbar verbunden und ist ein zylinderseitiges Ende jeder Kolben-Zylinder-Einheit 88 mit dem Gehäuse 30 des Schneidwerks 10 verschwenkbar verbunden bzw. daran abgestützt.

Die Krafteinstellmittel 80 weisen außerdem eine Einstellungserfassungseinrichtung auf, welche eingerichtet ist, einen mit der Größe der Vorspannkraft für die Schneidmesser 40 in Beziehung stehenden Einstellparameter der Krafteinstellmittel 80 zu erfassen.

Genauer weist die Einstellungserfassungseinrichtung einen Winkelsensor 89 (nur schematisch dargestellt) zur Erfassung eines Schwenkwinkels von einem oder von beiden der Schwenkhebel 86 der Abstandsverstellmittel 85 und/oder einen Linearwegsensor 90 (nur schematisch dargestellt) wie einen Wegmesszylinder zur Erfassung eines linearen Verstellweges von einer oder von beiden der Kolben-Zylinder-Einheiten 88 der Antriebseinrichtung 87 der Abstandsverstellmittel 85 auf. Durch diese Sensoren 89, 90 lässt sich in einfacher Weise auf die Position des Verbindungselements 81 in Bezug auf die Anlenkpunkte 64 bzw. dessen Abstand davon und somit auf die Federwirkung der Federmittel 70 und schließlich auf die Vorspannkraft der Vorspannmittel 50 rückschließen.

Das Schneidwerk 10 weist außerdem eine Ausschwenk-Erfassungseinrichtung auf, welche eingerichtet ist zu erfassen, wenn eines der Schneidmesser 40 aus seiner Schneidposition herausgeschwenkt wird.

Die Ausschwenk-Erfassungseinrichtung weist zu diesem Zwecke eine Lichtschranke 95 auf, so dass erfasst werden kann, wenn eines der Schneidmesser 40 aus seiner Schneidposition herausgeschwenkt wird. Daraus lässt sich vorteilhaft z.B. auf die Anzahl von Messerauslenkungen bzw. Messerauslösungen pro Zeiteinheit rückschließen, was ein Parameter für die Verstellung der Vorspannkraft sein kann.

Zusammenfassend sind die Zugfedern 71 zur Vorspannung der Kniehebel 61, 62 der Hebelmechanismen 60, welche die Schneidmesser 40 bei Fremdkörperkontakt absichern, auf dem gemeinsamen trägerähnlichen Verbindungselement 81 gelagert bzw. daran angelenkt, wobei das Verbindungselement 81 durch die zwei bewegungssynchronisierten Kolben-Zylinder-Einheiten 88 hydraulisch in seiner Position bzw. seinem Abstand zu den Anlenkpunkten 64 der Zugfedern 71 an den Hebelmechanismen 60 verstellt werden kann. Je nach Ausfahrposition der Kolben-Zylinder-Einheiten 88 ergibt sich eine andere Vorspannkraft zur Schneidposition hin und damit eine andere Ausrückschwelle für die Schneidmesser 40.

Zusammen mit der Einstellungserfassungseinrichtung (Winkelsensor 89, Linearwegsensor 90), welche die jeweilige Position des Verbindungselements 81 erfassen, kann in einem Bedienterminal (nicht dargestellt) die gewünschte Vorspannkraft für die Schneidmesser 40 variabel und für alle Schneidmesser 40 gleichzeitig und einheitlich eingestellt werden. Je nach Einsatzbedingung (z.B. viele Fremdkörper wie Steine / wenig Fremdkörper, viel / wenig Erntegutdurchsatz, Erntegutart, Messerzustand usw.) kann so die optimale Ausrückschwelle für die Schneidmesser 40 eingestellt werden.

Die Ausschwenk-Erfassungseinrichtung (Lichtschranke 95) kann zusätzlich zur Erkennung der Anzahl der Messerauslenkungen bzw. Messerauslösungen genutzt werden. So kann z.B. bei Überschreitung einer bestimmten Anzahl von Messerauslenkungen pro Zeiteinheit die Vorspannkraft erhöht werden und/oder bei Unterschreitung einer bestimmten Anzahl von Messerauslenkungen pro Zeiteinheit die Vorspannkraft vermindert werden.

Abschließend bleibt noch zu bemerken, dass, obwohl in den Figuren 1 und 2 nicht gezeigt, außerdem für jedes Schneidmesser 40 Stellmittel vorgesehen sind, über welche selektiv ein Verschwenken des Schneidmessers 40 zwischen der Schneidposition und der Außerbetriebsposition antreibbar ist.

### Bezugszeichenliste

- 1: Erntemaschine
- 10: Schneidwerk
- 11: Förderkanal
- 11a: Eingang
- 11b: Ausgang
- 20: Fördertrommel
- 21: Außenumfang
- 23: Mitnehmerscheibe
- 24: Mitnehmerzinke (Förderelement)
- 26: Hüllzylinder
- 30: Gehäuse
- 31: Leitelement
- 32: Öffnung
- 40: Schneidmesser
- 41a,41b: Längsenden
- 43a, 43b: Schneiden
- 45: Messeraufnahme
- 50: Vorspannmittel
- 60: Hebelmechanismus
- 61,62: Kniehebel
- 63: Knickgelenk
- 64: Anlenkpunkt
- 65: Hebel
- 70: Federmittel
- 71: Zugfeder(n)
- 80: Krafteinstellmittel
- 81: Verbindungselement
- 81a: Längsende
- 85: Abstandsverstellmittel
- 86: Schwenkhebel
- 87: Antriebseinrichtung
- 88: Kolben-Zylinder-Einheit
- 89: Winkelsensor
- 90: Linearwegsensor
- 95: Lichtschranke
- A1: Drehachse
- A2: Schwenkachse
- A3: Kniehebelachse
- A4: Kniehebelachse
- A5: Kniehebelachse
- A6: Schwenkachse
- x, y,: z Achsenrichtungen

## Patentansprüche

1. Schneidwerk (10) für eine Erntemaschine (1), aufweisend:
eine Fördertrommel (20), die um eine in einer Längsrichtung dieser verlaufende Drehachse (A1) drehbar gelagert ist,
eine Mehrzahl von Schneidmessern (40), die um eine Schwenkachse (A2) aus einer Schneidposition, in der die Schneidmesser (40) in einen an der Fördertrommel (20) gebildeten Förderkanal (11) für Erntegut hineingestellt sind, jeweils in eine Schwenkrichtung weg von der Fördertrommel (20) geschwenkt werden können, und
Vorspannmittel (50), welche eingerichtet sind, für die Schneidmesser (40) jeweils eine Vorspannkraft bereitzustellen, welche das jeweilige Schneidmesser (40) in eine Schwenkrichtung zur Schneidposition hin wirkend vorspannt, und eingerichtet sind, eine Größe der Vorspannkraft zu verändern, und
die Vorspannmittel (50) Krafteinstellmittel (80) aufweisen, die so eingerichtet sind, dass die Größe der Vorspannkraft variabel einstellbar ist, und
die Vorspannmittel (50) für die Schneidmesser (40) jeweils einen Hebelmechanismus (60) aufweisen, welcher mit dem jeweiligen Schneidmesser (40) verbunden ist und welcher auf Anschlag in eine Stützstellung stellbar ist, in der sich das jeweilige Schneidmesser (40) in der Schneidposition befindet, wobei die Vorspannmittel (50) Federmittel (70) aufweisen, welche die Hebelmechanismen (60) mittels Federwirkung zum Anschlag hin in die Stützstellung vorspannen, und wobei die Krafteinstellmittel (80) so vorgesehen sind, dass eine Stärke der Federwirkung variabel einstellbar ist,
**dadurch gekennzeichnet, dass** die Federmittel (70) für jeden Hebelmechanismus (60) eine separate Feder (71) aufweisen, deren eines Ende an einem Anlenkpunkt (64) mit dem jeweiligen Hebelmechanismus (60) verbunden ist, wobei die Krafteinstellmittel (80) ein Verbindungselement (81), das jeweilige andere Enden der Federn (71) der Hebelmechanismen (60) miteinander verbindet, und Abstandsverstellmittel (85) aufweisen, welche so eingerichtet sind, dass ein Abstand des Verbindungselements (81) von den jeweiligen Anlenkpunkten (64) variabel und für alle Federn (71) gleichzeitig und einheitlich einstellbar ist.

2. Schneidwerk (10) gemäß Anspruch 1, wobei die Abstandsverstellmittel (85) in Längsrichtung der Fördertrommel (20) beabstandete Schwenkhebel (86), welche jeweils über eine sich in Längsrichtung der Fördertrommel (20) erstreckende Schwenkachse (A6) schwenkbar gelagert sind und welche mit dem Verbindungselement (81) verbunden sind, so dass das Verbindungselement (81) über die Schwenkhebel (86) eine Schwenkbewegung um deren Schwenkachse (A6) zu den Anlenkpunkten (64) hin und von diesen weg ausführen kann, und eine Antriebseinrichtung (87) zum Antreiben der Schwenkbewegung des Verbindungselements (81) aufweisen.

3. Schneidwerk (10) gemäß Anspruch 2, wobei das Verbindungselement (81) zwei in Längsrichtung der Fördertrommel (20) entgegengesetzte Längsenden (81 a) aufweist, wobei die Antriebseinrichtung (87) zwei Kolben-Zylinder-Einheiten (88) aufweist, die mit jeweils einem der Längsenden (81 a) des Verbindungselements (81) verbunden und so eingerichtet sind, dass eine lineare Verstellbewegung jeder Kolben-Zylinder-Einheit (88) an das Verbindungselement (81) übertragbar ist, und wobei die beiden Kolben-Zylinder-Einheiten (88) miteinander bewegungssynchronisiert sind.

4. Schneidwerk (10) gemäß einem der Ansprüche 1 bis 3, wobei die Hebelmechanismen (60) der Vorspannmittel (50) jeweils als Kniehebelmechanismus ausgebildet sind, welcher zwei Kniehebel (61, 62) aufweist, die über ein Knickgelenk (63) an jeweiligen Längsenden dieser um eine sich in Längsrichtung der Fördertrommel (20) erstreckende erste Kniehebelachse (A3) schwenkbar miteinander verbunden sind, und wobei das Knickgelenk (63) in einer Gestrecktstellung der Kniehebel (61, 62) auf Anschlag stellbar ist, so dass die Stützstellung für das jeweilige Schneidmesser (40) hergestellt ist.

5. Schneidwerk (10) gemäß Anspruch 4, wobei die Federmittel (70) so vorgesehen sind, dass sie ihre Federwirkung an dem Knickgelenk (63) in den Kniehebelmechanismus einleiten.

6. Schneidwerk (10) gemäß Anspruch 4 oder 5, wobei ein dem Knickgelenk (63) abgewandtes Längsende des einen Kniehebels (62) um eine zur ersten Kniehebelachse (A3) parallele zweite Kniehebelachse (A4) schwenkbar gelagert ist und ein dem Knickgelenk (63) abgewandtes Längsende des anderen Kniehebels (61) um eine zur ersten Kniehebelachse (A3) parallele dritte Kniehebelachse (A5) schwenkbar mit dem Schneidmesser (40) verbunden ist, so dass ein in Schwenkrichtung weg von der Fördertrommel (20) Verschwenken des Schneidmessers (20) ein aus der Gestrecktstellung im Knickgelenk (63) Einknicken der Kniehebel (61, 62) des Kniehebelmechanismus gegen die Vorspannung der Federmittel (70) bewirkt.

7. Schneidwerk (10) gemäß einem der Ansprüche 1 bis 6, wobei die Krafteinstellmittel (80) eine Einstellungserfassungseinrichtung (89, 90) aufweisen, welche eingerichtet ist, einen mit der Größe der Vorspannkraft in Beziehung stehenden Einstellparameter der Krafteinstellmittel (80) zu erfassen.

8. Schneidwerk (10) gemäß einem der Ansprüche 1 bis 7, ferner mit einer Ausschwenk-Erfassungseinrichtung (95), welche eingerichtet ist zu erfassen, wenn eines der Schneidmesser (40) aus seiner Schneidposition herausgeschwenkt wird.

## Claims

1. A header mechanism (10) for a harvester (1) comprising:
a conveyor drum (20) mounted rotatably about an axis of rotation (A1) extending in a longitudinal direction of same,
a plurality of cutting blades (40) which can be pivoted about a pivot axis (A2) from a cutting position in which the cutting blades (40) are moved into a conveyor passage (11) formed on the conveyor drum (20) for crop material, in a respective pivoting direction away from the conveyor drum (20), and
biasing means (50) adapted to provide for the respective cutting blades (40) a biasing force which biases the respective cutting blade (40) in a pivoting direction towards the cutting position and adapted to alter a magnitude of the biasing force, and
the biasing means (50) have force adjusting means (80) which are so adapted that the magnitude of the biasing force is variably adjustable, and
the biasing means (50) for the cutting blades (40) have a respective lever mechanism (60) which is connected to the respective cutting blade (40) and which can be moved into an abutment condition in a support position in which the respective cutting blade (40) is in the cutting position, wherein the biasing means (50) have spring means (70) which bias the lever mechanisms (60) by means of a spring action towards an abutment condition into the support position and wherein the force adjusting means (80) are so provided that a strength of the spring action is variably adjustable,
**characterised in that** the spring means (70) have for each lever mechanism (60) a separate spring (71) of which one end is connected at a pivotal mounting point (64) to the respective lever mechanism (60), wherein the force adjusting means (80) have a connecting element (81) which connects together the respective other ends of the springs (71) of the lever mechanisms (60) and have spacing adjusting means (85) which are so adapted that a spacing of the connecting element (81) from the respective pivotal mounting points (64) is adjustable variably and simultaneously and in unitary relationship for all springs (71).

2. A header mechanism (10) according to claim 1 wherein the spacing adjusting means (85) have pivotal levers (86) which are spaced in the longitudinal direction of the conveyor drum (20) and which are respectively pivotably mounted by way of a pivot axis (A6) extending in the longitudinal direction of the conveyor drum (20) and which are connected to the connecting element (81) so that the connecting element (81) by way of the pivotal levers (86) can perform a pivotal movement about the pivot axis (A6) thereof towards and away from the pivotal mounting point (64) and have a drive device (87) for driving the pivotal movement of the connecting element (81).

3. A header mechanism (10) according to claim 2 wherein the connecting element (81) has two longitudinal ends (81a) in opposite relationship in the longitudinal direction of the conveyor drum (20), wherein the drive device (87) has two piston-cylinder units (88) which are connected to a respective one of the longitudinal ends (81a) of the connecting element (81) and are so adapted that a linear displacement movement of each piston-cylinder unit (88) can be transmitted to the connecting element (81) and wherein the two piston-cylinder units (88) are synchronised in movement with each other.

4. A header mechanism (10) according to one of claims 1 to 3 wherein the lever mechanisms (60) of the biasing means (50) are respectively in the form of a toggle lever mechanism having two toggle levers (61, 62) which are pivotably connected together by way of a pivot joint (63) at respective longitudinal ends of same about a first toggle lever axis (A3) extending in the longitudinal direction of the conveyor drum (20) and wherein the pivot joint (63) can be put into an abutment condition in a straight position of the toggle levers (61, 62) so that the support position is implemented for the respective cutting blade (40).

5. A header mechanism (10) according to claim 4 wherein the spring means (70) are so provided that they pass their spring action at the pivot joint (63) into the toggle lever mechanism.

6. A header mechanism (10) according to claim 4 or claim 5 wherein a longitudinal end, that is remote from the pivot joint (63), of the one toggle lever (62) is mounted pivotably about a second toggle lever axis (A4) parallel to the first toggle lever axis (A3), and a longitudinal end, that is remote from the pivot joint (63), of the other toggle lever (61) is connected to the cutting blade (40) pivotably about a third toggle lever axis (A5) parallel to the first toggle lever axis (A3) so that a pivotal movement of the cutting blade (40) in the pivoting direction away from the conveyor drum (20) causes the toggle levers (61, 62) of the toggle lever mechanism to pivot out of the straight position in the pivot joint (63) against the biasing force of the spring means (70).

7. A header mechanism (10) according to one of claims 1 to 6 wherein the force adjusting means (80) have an adjustment detection device (89, 90) adapted to detect an adjustment parameter of the force adjusting means (80), that is related to the magnitude of the biasing force.

8. A header mechanism (10) according to one of claims 1 to 7 and further comprising an outward pivoting detection device (95) which is adapted to detect when one of the cutting blades (40) is pivoted out of its cutting position.

## Revendications

1. Tablier de coupe (10) pour une machine de récolte (1), présentant un tambour d'alimentation (20) qui est monté rotatif autour d'un axe de rotation (A1) s'étendant dans une direction longitudinale de celui-ci, une pluralité de couteaux (40) qui peuvent chacun pivoter autour d'un axe de pivotement (A2) à partir d'une position de coupe, où les couteaux (40) sont placés dans un canal d'alimentation (11) pour produit de récolte formé sur le tambour d'alimentation (20), dans un sens de pivotement qui les éloigne du tambour d'alimentation (20), et des moyens de précontrainte (50) qui sont conçus pour fournir à chacun des couteaux (40) une force de précontrainte qui précontraint le couteau (40) respectif dans un sens de pivotement agissant vers la position de coupe, et qui sont conçus pour modifier une grandeur de la force de précontrainte, et les moyens de précontrainte (50) présentant des moyens de réglage de force (80) qui sont conçus de façon que la grandeur de la force de précontrainte soit réglable de manière variable, et les moyens de précontrainte (50) pour les couteaux (40) présentant chaque fois un mécanisme à leviers (60) qui est relié au couteau (40) respectif et qui peut être placé en butée dans une position d'appui où le couteau (40) respectif se trouve dans la position de coupe, les moyens de précontrainte (50) présentant des moyens formant ressort (70) qui précontraignent les mécanismes à levier (60) vers la butée dans la position d'appui par effet de ressort, et les moyens de réglage de force (80) étant prévus de façon qu'une force de l'effet de ressort soit réglable de manière variable, **caractérisé en ce que** les moyens formant ressort (70) présentent pour chaque mécanisme à leviers (60) un ressort (71) séparé dont une extrémité est reliée à un point d'articulation (64) avec le mécanisme à leviers (60) respectif, les moyens de réglage de force (80) présentant un élément de liaison (81) qui relie entre elles les autres extrémités respectives des ressorts (71) des mécanismes à leviers (60), et des moyens de réglage de distance (85) qui sont conçus de façon qu'une distance entre l'élément de liaison (81) et les points d'articulation (64) respectifs soit réglable de manière variable et de manière simultanée et uniforme pour tous les ressorts (71).

2. Tablier de coupe (10) selon la revendication 1, dans lequel les moyens de réglage de distance (85) présentent des leviers pivotants (86) qui sont espacés dans la direction longitudinale du tambour d'alimentation (20) et qui sont montés chacun pivotants sur un axe de pivotement (A6) s'étendant dans la direction longitudinale du tambour d'alimentation (20) et sont reliés à l'élément de liaison (81), de façon que l'élément de liaison (81) puisse effectuer par l'intermédiaire des leviers pivotants (86) un mouvement pivotant autour de leur axe de pivotement (A6) en direction des points d'articulation (64) et à l'opposé de ceux-ci, et un dispositif d'entraînement (87) pour entraîner le mouvement pivotant de l'élément de liaison (81).

3. Tablier de coupe (10) selon la revendication 2, dans lequel l'élément de liaison (81) présente deux extrémités longitudinales (81a) opposées dans la direction longitudinale du tambour d'alimentation (20), le dispositif d'entraînement (87) présentant deux unités à cylindre et piston (88) qui sont respectivement reliées à une des extrémités longitudinales (81a) de l'élément de liaison (81) et conçues de façon qu'un mouvement de réglage linéaire de chaque unité à cylindre et piston (88) puisse être transmis à l'élément de liaison (81), les deux unités à cylindre et piston (88) se déplaçant de manière synchronisée entre elles.

4. Tablier de coupe (10) selon l'une des revendications 1 à 3, dans lequel les mécanismes à leviers (60) des moyens de précontrainte (50) sont chacun réalisés sous la forme de mécanismes à leviers à genouillère, lesquels présentent deux leviers à genouillère (61, 62) qui sont reliés ensemble de manière pivotante autour d'un premier axe de levier à genouillère (A3) s'étendant dans la direction longitudinale du tambour d'alimentation (20) par une articulation (63) à une de leurs extrémités longitudinales respectives, et l'articulation (63) pouvant, dans une position étirée des leviers à genouillère (61, 62), être mise en butée de façon que la position d'appui pour le couteau (40) respectif soit établie.

5. Tablier de coupe (10) selon la revendication 4, dans lequel les moyens formant ressort (70) sont prévus de façon à exercer leur effet de ressort sur l'articulation (63) dans le mécanisme à leviers à genouillère.

6. Tablier de coupe (10) selon la revendication 4 ou 5, dans lequel une extrémité longitudinale d'un levier à genouillère (62) éloignée de l'articulation (63) est montée pivotante autour d'un deuxième axe de levier à genouillère (A4) parallèle au premier axe de levier à genouillère (A3), et une extrémité longitudinale de l'autre levier à genouillère (61) éloignée de l'articulation (63) est reliée au couteau (40) de manière pivotante autour d'un troisième axe de levier à genouillère (A5) parallèle au premier axe de levier à genouillère (A3), de façon qu'un pivotement du couteau (20) dans un sens de pivotement qui l'éloigne du tambour d'alimentation (20) provoque une sortie de la position étirée dans l'articulation (63) et une inflexion des leviers à genouillère (61, 62) du mécanisme à leviers à genouillère contre la précontrainte des moyens formant ressort (70).

7. Tablier de coupe (10) selon l'une des revendications 1 à 6, dans lequel les moyens de réglage de force (80) présentent un dispositif de détection de réglage (89, 90) qui est conçu pour détecter un paramètre de réglage des moyens de réglage de force (80) en relation avec la grandeur de la force de précontrainte.

8. Tablier de coupe (10) selon l'une des revendications 1 à 7, présentant en outre un dispositif de détection de pivotement (95) qui est conçu pour détecter quand un des couteaux (40) est éloigné de sa position de coupe par pivotement.
